# NEW EUROPEAN PATENT SPECIFICATION

(11) **EP 0 696 694 B2**
(45) Date of publication and mention of the opposition decision: **04.02.2004**
(45) Mention of the grant of the patent: 07.01.1999
(21) Application number: 95111823.1
(22) Date of filing: 27.07.1995
(51) Int. Cl.: F16F 15/123

(54) **Torque absorbing disc**
Drehmoment-absorbierende Scheibe
Disque absorbeur de couple de rotation

(30) Priority: 29.07.1994 JP 17825594; 29.07.1994 JP 17825694
(43) Date of publication of application: 14.02.1996
(73) Proprietor: AISIN SEIKI KABUSHIKI KAISHA, Kariya City Aichi Pref. (JP)
(72) Inventor: Maki, Naoyuki, Haza-gun, Aichi-pref. (JP); Takashi, Yukihisa, Chita-gun, Aichi-pref. (JP)
(74) Representative: Leson, Thomas Johannes Alois, Dipl.-Ing.

(56) References cited:
- EP-B- 0 070 099
- DE-A- 3 314 908
- FR-A- 1 057 623
- FR-A- 2 620 503
- FR-A- 2 624 236
- FR-A- 2 652 399
- GB-A- 2 254 907
- JP-A- 5 643 176
- JP-U- 6 123 545
- Webster's Third New International Dictionary,p 1529

## Description

### BACKGROUND OF THE INVENTION

### 1. Field of the invention:

The present invention relates to a torque absorbing disc which transmits input torque from a plate to a hub member having a flange through a plurality of torsion members while the input torque is absorbed by the torsion members and is used for a clutch disc and so on.

### 2. Description of the prior art:

A conventional torque absorbing disc of this kind is disclosed in, for example, Japanese Patent Application Laid-Open Publications No. 58 (1983)-187623, No. 59 (1984)-26625 or Japanese Utility-Model Application Laid-Open Publication No. 59 (1984)-166030. This torque absorbing disc includes a hub member having a flange portion and plate members which are disposed around a hub portion of the hub member so as to be opposite to the flange portion, respectively. Each of the plate members and the flange portion of the hub member have a plurality of window portions each of which is extended in the circumferential direction of the disc. The plate members are disposed so that their window portions are overlapped the window portions of the flange portion of the hub member, respectively. The hub member and the plate members are elastically connected each other in the circumferential direction of the disc through a plurality of torsion members each of which is disposed in the overlapped window portions, respectively and thereby an input torque is transmitted from the plate members to the hub member through the torsion members while being absorbed by a flexible contraction of each torsion members. In this conventional torque absorbing disc, a seat member is disposed among an axial end surface of each of the torsion members, circumferential end surfaces of the window portions of the plate members and the flange portion of the hub member. A supporting portion having a flange shape is formed on an edge portion of each of the window portion of the plate members and the seat members are prevented from relative moving with regard to the plate members by the supporting portions and the circumferential surfaces and the circumferential end surfaces of the window portions.

In the above prior torque absorbing disc, however, the seat members are not prevented from relative moving with respect to the hub member. Thereby, for example, in case that the torsion members are contracted by the torque through the plate members, the seat members located in the input side of the torque keep contacting with the circumferential end surfaces of the window portions of the plate members in order to prevent from moving. On the other hand, the seat members located in the output side of the torque are separated from the circumferential end surfaces of the window portions of the plate members. As a result, the seat members located in the output side of the torque can be moved with the torsion members in the diametrical and axial direction of the disc by the centrifugal force and so on. Accordingly, the seat members located in this movable side are pressed to the plate members and this movement of the seat members may cause the wear.

Japanese Utility model no. 61-23545 shows, a torque absorbing disc comprising: a hub member having a flange portion a plate members disposed around a hub portion of the hub member so as to be opposite to the flange portion in the axial direction, respectively, a plurality of torsion members elastically connecting between the hub member 6 and the plate members in the circumferential direction of the disc and a plurality of seat members each of which is disposed among each of the torsion members the plate members and the hub member 6, each of the seat members having one side face portion contacted with the circumferential end surface of each of the torsion members and the other side face portion contacted with the plate members and the flange portion of the hub member the other face portion being provided with a projected holding portion and a guide portion nipping the flange portion of the hub member in the axial direction of the disc.

### SUMMARY OF INVENTION

It is, therefore, an object of the present invention to provide a torque absorbing disc which overcomes the above drawback.

It is another object of the present invention to provide a torque absorbing disc which the wear of the seat member caused by the plate members can be prevented. This object is solved with a torque absorbing disc having the features of claim 1.

### BRIEF DESCRIPTION OF THE DRAWINGS

Additional objects and advantages of the present invention will become more apparent from the following detailed description of preferred embodiments thereof when considered with reference to the attached drawings, in which:
Fig. 1 is a plan view of an unclaimed example of a clutch disc applied a torque absorbing disc in accordance with the present invention;
Fig. 2 is a sectional view taken substantially along the line B-B of Fig. 1;
Fig. 3 is a partly expanded sectional view of Fig. 1;
Fig. 4 is a cross sectional view of Fig. 3;
Fig. 5 is a side view of Fig. 4;
Fig. 6 is a plan view of a seat member in accordance with the present invention;
Fig. 7 is a side view of Fig. 6;
Fig. 8 is a top view of Fig. 6;
Fig. 9 is a bottom view of Fig. 6;
Fig. 10 is a partly expanded sectional view of an embodiment of a clutch disc applied a torque absorbing disc in accordance with the present invention; and
Fig. 11 is a graph showing a torsion characteristic of the embodiment shown in Fig. 10.

### DESCRIPTION OF THE PREFERRED EMBODIMENTS

A torque absorbing disc constituted in accordance with the present invention will be described with reference to attached drawings.

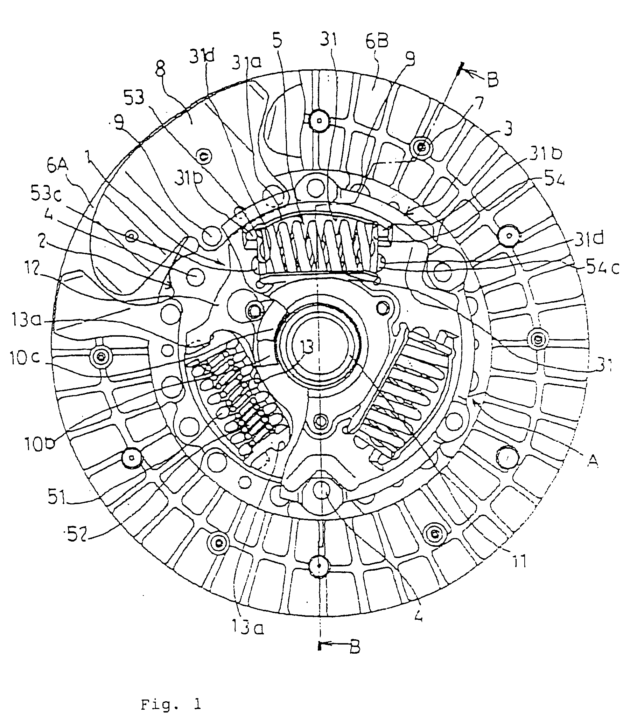

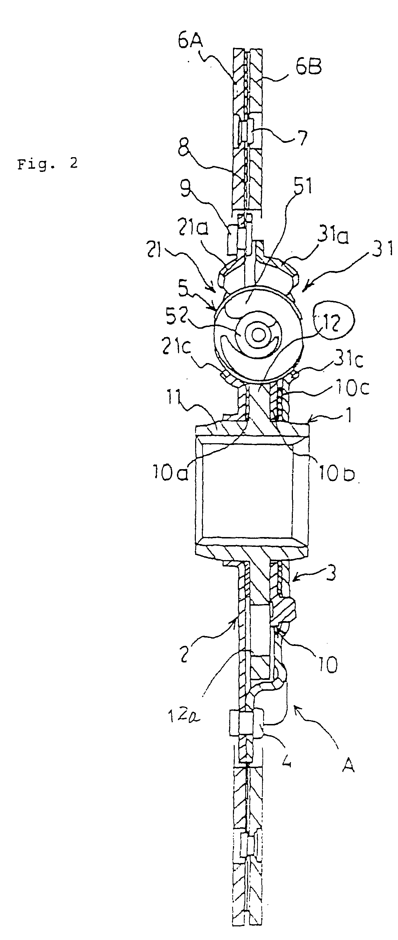

Referring to Fig. 1 and Fig. 2, a torque absorbing disc A as an unclaimed, explanatory example is applied to a clutch disc of a frictional clutch which is disposed between the engine (not shown) and the transmission (not shown) of automobiles. A plurality piece of plate springs 8 having waves are fixed to an outer circumferential portion of a disc plate 2 at regular intervals in the circumferential direction by rivets 9. A pair of circular facings (frictional members) 6A, 6B which are held between a flywheel (not shown) of the engine and a pressure plate (not shown) by a spring force are fixed as an input member to side faces of the plate springs 8 by rivets- 7 so as to sandwich the plate springs 8 therebetween. An input shaft (not shown) of the transmission is inserted as an output member into a hole of a hub portion 11 of a hub member 1 and the rotation of the hub member 1 is transmitted to the input shaft through a spline engagement.

As shown in Fig. 1 and Fig. 2, the torque absorbing disc A includes the hub member 1 having the hub portion 11 and a flange portion 12 which is radially extended outward from the outer circumferential portion of the hub portion 11, the disc plate 2 and a sub plate 3 which are disposed around the hub portion 11 of the hub member 1 so as to be opposite to the flange portion 12 in the axial direction, respectively and to sandwich the flange portion 12 of the hub member 1 therebetween and three torsion members 5 elastically connecting between the hub member 1 and the plates 2, 3 in the circumferential direction of the disc. In this example, each of the torsion members 5 is comprised of a first coil spring 51 having a large diameter and a second coil spring 52 whose diameter is smaller than that of the first coil spring 51 and which is disposed in the first coil spring 51 so as to be parallel with the first coil spring 51. Now, each of the torsion members 5 is not always comprised of two coil springs and it is possible to form a torsion member by a single coil spring. Furthermore, it is possible to use an elastic member such as rubber and so on as a torsion member.

Three window portions 21, 31 which are extended in the circumferential direction and which are located on a concentric circle are formed on the disc plate 2 and the sub plate 3 at regular intervals. Three notch portions 13 which are extended in the circumferential direction and which are located on the same concentric circle are formed on the flange portion 11 of the hub member 1 at the same regular intervals. The notch portions 13 and the window portions 21, 31 are overlapped in the circumferential direction and every two overlapped window portions 21, 31 and every one overlapped notch portion 13 form a group. Each of the torsion members 5 is disposed in each of three groups under the contracted condition with a predetermined amount. Seat members 53, 54 are disposed among the axial end portions of the torsion members 5, the circumferential end portions of the notch portions 13 and the circumferential end portions of the window portions 21, 31 so as to be pressed on the circumferential end portions of the notch portions 13 and the window portions 21, 31 by the spring force of the torsion members 5, respectively.

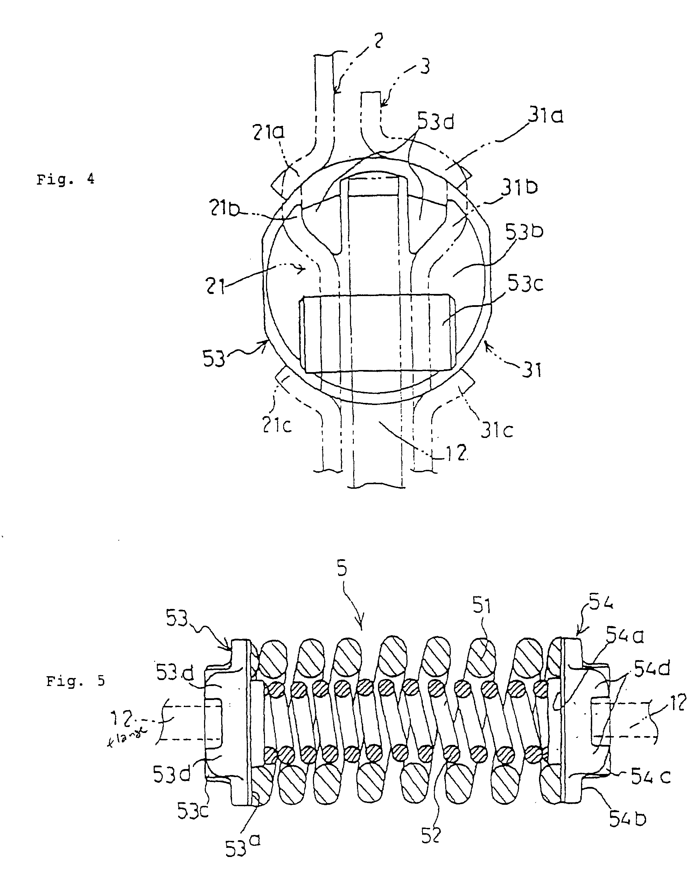

As shown in Fig. 2 and Fig. 4, the outer circumferential portions of the window portions 21, 31 have an arc shape and are provided with first edge portions 21a, 31a, respectively. The first edge portions 21a, 31a are formed by bending and have a flange shape projected in the axial direction and extended in the circumferential direction so as to surround the radial outer portions of the torsion members 5, respectively. The inner circumferential portions of the window portions 21, 31 have a straight shape and are provided with third edge portions 21c, 31c, respectively. The third edge portions 21c, 31c are formed by bending and have a flange shape projected in the axial direction and extended in the circumferential direction so as to surround the radial inner portions of the torsion members 5, respectively. The seat members 53, 54 and the torsion members 5 are prevented from jumping out of the window portions 21, 31 by these first and second edge portions 21a, 31a, 21c, 31c under the condition that the torsion members 5 are contracted, respectively.

Second edge portions 21b, 31b are formed on portions of the disc plate 2 and the sub plate 3 which are adjacent to the circumferential end portions of the outer circumferential portions of the window portions 21, 31, respectively. The second edge portions 21b, 31b are formed by drawing so as to project in the axial direction of the disc and to form a space between the flange portion 12 of the hub member 1 and the plates 2, 3, respectively. These spaces are opened into the window portions 21, 31, respectively. The second edge portions 21b, 31b are successive to the first edge portions 21a, 31a, respectively and thereby the strength of the first edge portions 21a, 31a against the load applied to the first edge portions 21a, 31a due to the contraction of the torsion members 5 and the centrifugal force acted to the torsion members 5 are improved.

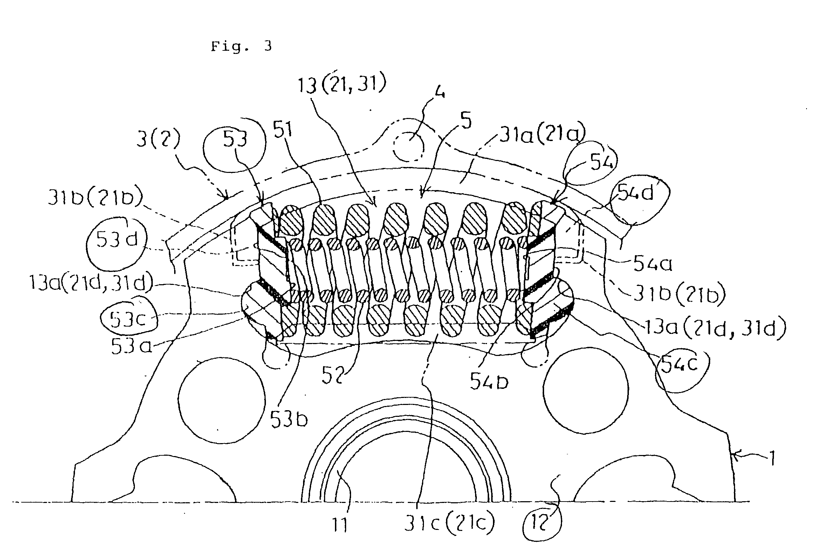

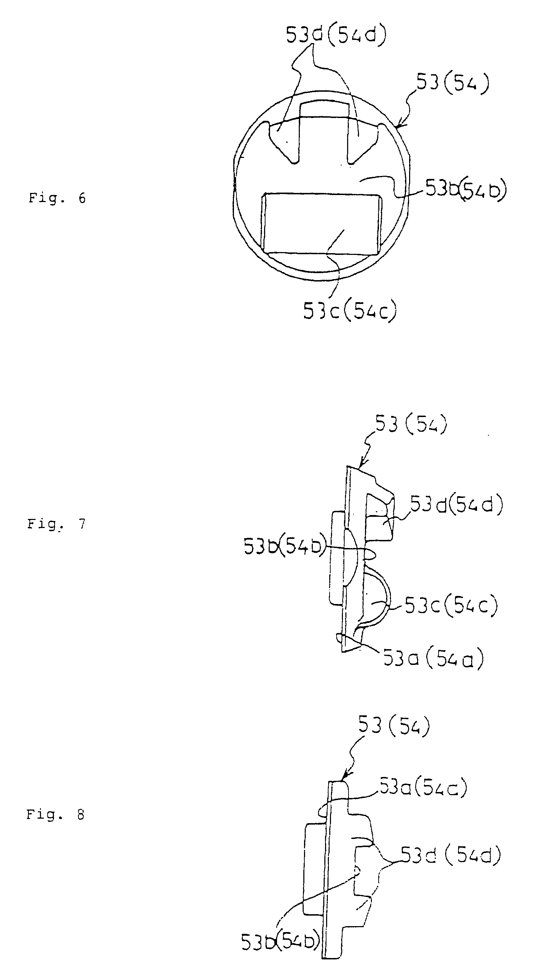

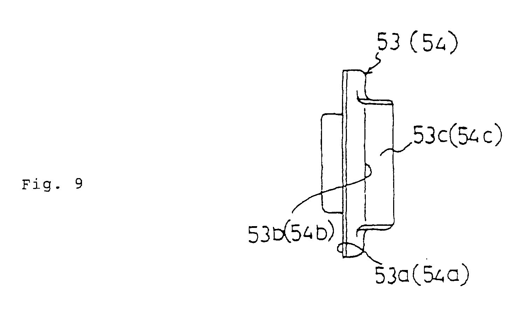

As shown in Fig. 3 to Fig. 9, one side faces 53a, 54a of the seat members 53, 54 which are contacted with the axial end portions of the torsion members 5 have outer flat surfaces and inner flat surfaces projected from the outer flat surfaces, respectively. The outer flat surfaces contact with the axial end portions of the first coil springs 51 and the inner flat surfaces contact with the axial end portions of the second coil springs 52, respectively. The other side faces 53b, 54b of the seat members 53, 54 contact with the circumferential end portions of the notch portions 13 of the flange portion 12 of the hub member 1 at the center portion in the axial direction of the disc and contact with the circumferential end portions of the window portions 21, 31 of the plates 2, 3 at both outer portions in the axial direction of the disc, respective ly.

On the radial inner portions of the other side faces 53b, 54b, holding portions 53c, 54c having a half circle sectional shape which are projected toward the circumferential end portions of the notch portions 13 and the window portions 21, 31 and which are extended in the axial direction of the disc are formed, respectively. On the other hand, a pair of guide portions 53d, 54d which are projected toward the circumferential end portions of the notch portions 13 and the window portions 21, 31 are formed on each of the radial outer portions of the other side faces 53b, 54b. Each pair of guide portions 53d, 54d are extended in parallel with the side face of the flange portion 12 in the diametrical direction. On the radial inner portions of the circumferential end portions of the notch portions 13 of the flange portion 12 of the hub member-1 and the window portions 21, 31 of the plates 2, 3, concave portions 13a, 21d, 31d having the same sectional shape (a half circle) as the holding portions 53c, 54c are formed so as to be opposite to the holding portions 53c, 54c, respectively. The holding portions 53c, 54c are inserted into the concave portions 13a, 21d, 31d and thereby, the seat members 53, 54 are held on the hub member 1, the disc plate 2 and the sub plate 3 in the circumferential and diametrical directions of the disc, respectively. In this example the sectional shape of the holding portion 53c (54c) is a half circle, but it is possible to form a holding portion having the other sectional shape so long as the concave portion 13a (21d, 31d) has the same sectional shape as the holding portion so as to hold the seat member 53 (54) sectional shape of the are formed the window portions 21 in the circumferential and diametrical directions of the disc. Furthermore, as shown in Fig. 4, the flange portion 12 of the hub member 1 is nipped between each pair of guide portions 53d, 54d in the axial direction of the disc and each pair of guide portions 53d, 54d are disposed in the spaces formed by each of the second edge portions 21b, 31b. Thereby, the seat members 53, 54 are supported by the hub member 1, the disc plate 2 and the sub plate 3 in the axial direction of the disc.

The above-described torque absorbing disc operates as follows:
When the clutch is connected, the torque is transmitted to the disc plate 2 and the sub plate 3 through the facings 6A, 6B. The torque which is transmitted to the plates 2, 3 is further transmitted to the transmission through the torsion members 5 and the hub member 1. At this time, the hub member 1 and the plates 2, 3 are relatively rotated with a predetermined torsion characteristic while the torsion members 5 are contracted in response to the value of the applied torque. Thereby, an absorbing effect at the torque transmission is obtained. The torque absorbing disc A is provided with a hysteresis mechanism comprising a first thrust plate 10a, a second thrust plate 10b and a dish spring 10b. The first thrust plate 10a is disposed around the hub portion 11 of the hub member 1 between the disc plate 2 and the flange portion 12 of the hub member 1. The second thrust plate 10b is disposed around the hub portion 11 of the hub member 1 between the sub plate 3 and the flange portion 12 of the hub member 1. Thereby, the hysteresis characteristic is added to the torsion characteristic, when the hub member 1 and the plates 2, 3 are relatively rotated. As a result, a damping effect at the torque transmission from the plates 2, 3 to the hub member 1 is obtained.

For example, when each of the torsion members 5 is contracted by the torque which is operated from left side in the circumferential direction in Fig. 3, each of the other side faces 53b of the seat members 53 contacts with each of the circumferential end portions of the plates 2, 3 which are located at input side (left side in Fig. 3) and is separated from each of the circumferential end portions of the notch portions 13 of the flange portion 11 of the hub member 1 which is located at input side (left side in Fig. 3). Each of the other side faces 54b of the seat members 54 contacts with each of the circumferential end portions of the notch portions 13 of the flange portion 11 of the hub member 1 which is located at output side (right side in Fig. 3) and is separated from each of the circumferential end portions of the plates 2, 3 which are located at output side (right side in Fig. 3). At this time, each of the seat members 53 is prevented from moving relative to the plates 2, 3 in the circumferential, diametrical and axial directions of the disc by the engagement between each of the holding portions 53c and each of the concave portions 21d, 31d, the engagement between each of the guide portions 53d and each of the second edge portions 21b, 31b and each of the first edge portions 21a, 31a. Furthermore, each of the seat members 54 is prevented from moving relative to the hub member 1 in the circumferential, diametrical and axial directions of the disc by the engagement between each of the holding portions 54c and each of the concave portions 13a and the fact that the flange portion 12 of the hub member 1 is nipped by each of the guide portions 54d.
Now, the flange portion 12 of the hub member 1 is provided with three holes 12a which are formed between the adjacent notch portions 13. Thereby, the stress which is applied from each of the holding portions 53c to the flange portion 12 is efficiently dispersed. As a result, the strength of the flange portion 12 of the hub member 1 is maintained and therefore it is able to thin the thickness of the flange portion 12.

As mentioned above, in case that the torsion members 5 are contracted, the seat members (in the above description, the seat members 54) which are movable relative to the disc plate 2 and the sub plate 3 are prevented from moving by the hub meinber 1. Thereby, these seat members are not pressed on the disc plate 2 and the sub plate 3 and therefore are prevented from wearing. Furthermore, since the seat members 53, 54 are prevented from moving relative to the hub member 1 by the holding portions 53c, 54c and the guide portions 53d, 54d, it is possible to dispose the torsion members 5 including the seat members 53, 54 in the notch portions 13 each of whose outer circumferential portions is opened. As a result, it is not necessary to form window portions on the flange portion 12 of the hub member 1 and therefore the weight of the hub member 1 is decreased.

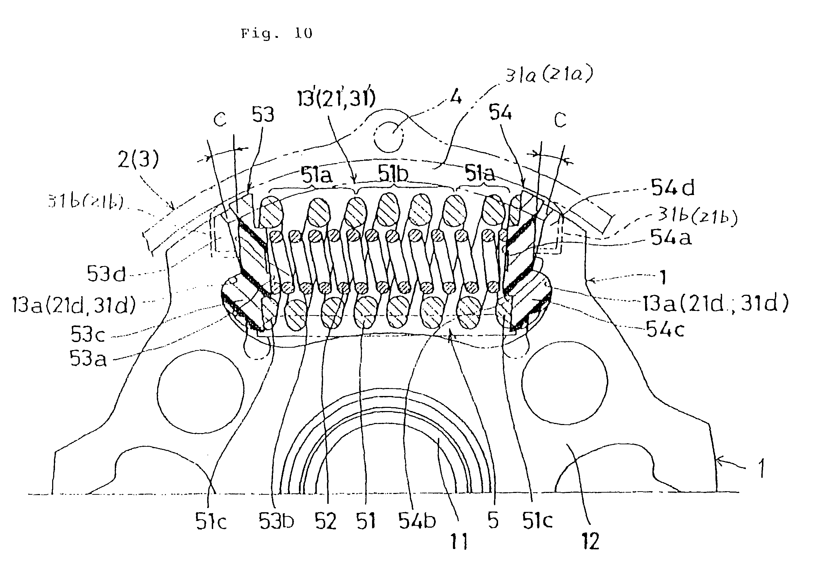

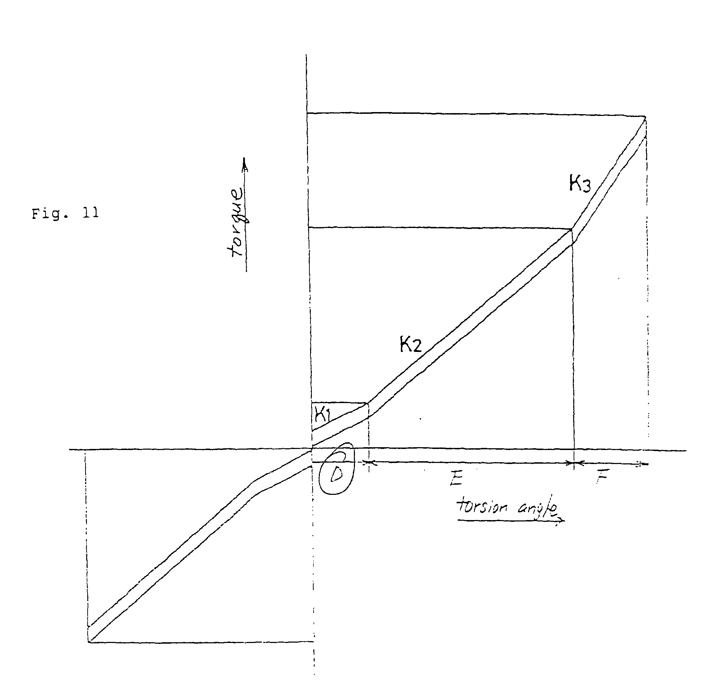

Fig. 10 shows a partly expanded sectional view of an embodiment of the present invention. In Fig. 11, the same parts as compared with Fig. 3 are identified by the same reference numerals as the utilized numerals in Fig.3, respectively. In this embodiment, window portions 21', 31' and notch portions 13' have a fan shape, respectively. Both circumferential end surfaces of each of the window portions 21', 31' and the notch portions 13' have an inclination of a predetermined angle C with respect to the flat surfaces of the other side faces 53b, 54b of the seat members 53, 54 so as to form a space therebetween, respectively. Thereby, the seat members 53, 54 are rotatable round the holding portions 53c, 54c in the circumferential direction with regard to the flange portions 12 of the hub member 1, the disc plate 2 and the sub plate 3. In case that seat members 53, 54 are rotated, the seat members 53, 54 are supported by the holding portions 53c, 54c and the concave portions 13a, 21d, 31d in the diametrical direction of the disc and are supported by the guide portions 53d, 54d in the axial direction of the disc.

As shown in Fig. 10, the first coil spring 51 is provided with a first wound portion 51a and a second wound portion 51b. The first wound portion 51a is located at a certain portion extending from both axial end portions on which a seat portion 51c is formed to a center portion, respectively. Both first wound portions 51 a have a same wound number and a same pitch, respectively The second wound portion 51b is located between both first wound portions 51a and has a pitch smaller than that of the first wound portion 51a. In this embodiment, the second coil spring 52 has an equal pitch, but it is possible to change the pitch of the second coil spring 52 as the first coil spring 51. As mentioned above, since the first coil spring 51 having different pitches is symmetric in the axial direction, even if the first coil spring 51 is installed on the hub member 1, the disc plate 2 and the sub plate 3 in the either axial direction, the unbalance of the weight does not occur. Thereby, it is able to easily install the torsion member 5 on the hub member 1, the disc plate 2 and the sub plate 3 and therefore it is prevented to increase the man-hour of the assembling and to cause the erroneous assembling. In this embodiment, the other structures are same as the above mentioned first embodiment.

When the clutch is connected, the torque is transmitted from the disc plate 2 and the sub plate 3 to the hub member 1, through the torsion members 5. At this time, the hub member 1 and the plates 2, 3 are relatively rotated with a torsion characteristic shown in Fig. 11 while the torsion members 5 are contracted in response to the value of the applied torque. As shown in Fig. 11, the torsion members 5 are contracted in response to the torque. In the area D of the torsional angle shown in Fig. 11, the torsion members 5 are contracted more or less and thereby the seat members 53, 54 are rotated with the predetermined angle C so as to contact between circumferential end surfaces of each of the window portions 21', 31' and the notch portions 13' have an inclination of a predetermined. angle C with respect to the flat surfaces of the other side faces 53b, 54b of the seat members 53, 54, respectively. As a result, the torsion characteristic K1 is obtained and the torque transmission of the torque value based on the torsion characteristic K1 is done. In the area E of the torsion angle shown in Fig. 11, the first wound portion 51a and the second wound portion 51 b of each of the first coil springs 51 and each of the second coil springs 52 are contracted. Thereby, the torsion characteristic K2 is obtained and the torque transmission of the torque value based on the torsion characteristic K2 is done. Furthermore, in the area F of the torsion angle shown in Fig. 11, the first wound portion 51 a of each of the first coil springs 51 is completely contracted and the second wound portion 51b of each of the first coil springs 51 and each of the second coil springs 52 are contracted. Thereby, the torsion characteristic K3 is obtained and the torque transmission of the torque value based on the torsion characteristic K3 is done.

As mentioned above, in this second embodiment, when the torsion members 5 are contracted, the seat members 53, 54 are rotated relative to the disc plate 2, the sub plate 3 and the flange portion 12 of the hub member 1 in the circumferential direction of the disc. Thereby, the torsion characteristic K1 due to the rotation of the seat members 53, 54 is obtained before the torsion characteristics K2, K3 due to the contraction of the torsion members 5. Accordingly, a multistage torsion characteristic is obtained without various torsion members 5 and thereby it is able to try to reduce the number of the parts and to simplify the structures.

As mentioned above, according to the present invention, the seat members which are movable relative to the plate members are prevented from moving relative to the hub member in the diametrical and the axial directions of the disc by the engagement between the holding portions and the flange portion of the hub member and the engagement between the guide portions sand the flange portion of the hub member. Therefore, in case that the torsion members are contracted, the seat members are not pressed on the plate members and thereby it is able to prevent that the seat members wear. Furthermore, since it is able to form a space for receiving a torsion member on the flange portion of the hub member by a notch portion, respectively, it is possible to decrease the weight of the hub member.

A preferred embodiment and modes of operation of the present invention have been described in the foregoing description. The invention which is intended to be protected herein should not, however, be construed as limited to the particular formes disclosed, as these are to be regarded as illustrative rather than restrictive. Variations and changes may be made by those skilled in the art without departing from the scope of the present invention. Accordingly, the foregoing detailed description should be considered exemplary in nature and not limited to the scope of the invention as set forth in the appended claims.

## Claims

1. A torque absorbing disc comprising:
a hub member having a flange portion,
a plate members disposed around a hub portion of the hub member so as to be opposite to the flange portion in the axial direction, respectively,
a plurality of torsion members elastically connecting between the hub member and the plate members in the circumferential direction of the disc and
a plurality of seat members each of which is disposed among each of the torsion members, the plate members and the hub member, each of the seat members having one side face portion contacted with the circumferential end surface of each of the torsion members and the other side face portion contacted with the plate members and the flange portion of the hub member, the other face portion being provided with a projected holding portion held on the flange portion of the hub member and positioned at the inner side thereof in the radial direction of the disc so as not to be able to move the seat members relative to the hub member in the radial direction of the disc and a guide portion nipping the flange portion of the hub member in the axial direction of the disc, wherein a space is formed between the other face portion at the outer side thereof in the radial direction of the disc and the flange portion of the hub member so as to be able to rotate the seat members around the holding portion during the beginning area where the torque is transmitted from the plate members to the hub member.

2. A torque absorbing disc as recited in claim 1, wherein the plate members comprises two plates, each of plates is provided with a plurality of window portions extended in the circumferential direction at regular intervals and located on a concentric circle, the flange portion of the hub member is provided with a plurality, of notch portions extended in the circumferential direction at the same regular intervals and located on the same concentric circle and the torsion members are disposed in the window and the notch portions which are overlapped each other.

3. A torque absorbing disc as recited in claim 2, wherein the holding portions project in the circumferential direction of the disc and concave portions in which the holding portions are inserted are formed on the other side face portions of the plate members and the flange portion of the hub member.

4. Atorque absorbing disc as recited in claim 3, wherein edge portions projecting in the axial direction are formed on the outer circumferential end portions of the window portions so as to form a pair of spaces between the flange portion of the hub member and the plate members, respectively and the guide portions are inserted into the spaces so as to nip the flange portion of the hub member therebetween.

5. A torque absorbing disc as recited in claim 4, wherein the holding portions of the seat members have a half-circle sectional shape and the concave portions of the plate members and the flange portion of the hub member have the same shape as the holding portions, respectively.

6. Atorque absorbing disc as recited in claim 5, wherein each of the outer circumferential end surfaces of the window portions and the notch portions has an inclination of a predetermined angle with respect to the opposing flat surfaces of the other side faces of the seat members.

## Patentansprüche

1. Drehmoment absorbierende Scheibe mit:
einem Nabenelement mit einem Flanschabschnitt,
um ein Nabenabschnitt des Nabenelements herum so angeordnete Plattenelemente, dass sie jeweils in axialer Richtung gegenüber des Flanschabschnitts sind,
eine Mehrzahl von Verdrehelementen, die das Nabenelement und die Plattenelemente in Umfangsrichtung der Scheibe elastisch miteinander verbinden und
eine Mehrzahl von Sitzelementen, wobei jedes von ihnen zwischen jedem der Verdrehelemente, der Plattenelemente und des Nabenelements angeordnet ist und jedes der Sitzelemente einen die Umfangsendfläche jedes Verdrehelements berührenden Seitenflächenabschnitt und einen anderen die Plattenelemente und den Flanschabschnitt des Nabenelements berührenden Seitenflächenabschnitt hat, wobei der andere Flächenabschnitt mit einem vorstehendem Halteabschnitt versehen ist, der an dem Flanschabschnitt des Nabenelements gehalten und in Radialrichtung der Scheibe an der Innenseite davon positioniert ist, so dass er die Sitzelemente nicht relativ zu dem Nabenelement in der Radialrichtung der Scheibe und einem Führungselement, das den Flanschabschnitt des Nabenelements in axialer Richtung der Scheibe einklemmt, bewegen kann, wobei ein Raum zwischen dem anderen Seitenflächenabschnitt an seiner in Radialrichtung der Scheibe äußeren Seite und dem Flanschabschnitt des Nabenelements ausgebildet ist, so dass die Sitzelemente um den Halteabschnitt während des Anfangsbereichs drehen können, in dem das Drehmoment von den Plattenelementen auf das Nabenelement übertragen wird.

2. Drehmoment absorbierende Scheibe nach Anspruch 1, wobei die Plattenelemente zwei Platten umfassen, wobei jede Platte eine Mehrzahl von sich in Umfangsrichtung in gleichmäßigen Abständen erstreckende und auf konzentrischen Kreisen befindliche Fensterabschnitte hat, und der Flanschabschnitt des Nabenelements eine Mehrzahl von sich in Umfangsrichtung in den selben gleichmäßigen Abständen erstreckende und auf denselben konzentrischen Kreisen befindliche Kerbenabschnitte hat, wobei die Verdrehelemente in den sich jeweils überlappenden Fenster- und Kerbenabschnitten angeordnet sind.

3. Drehmoment absorbierende Scheibe nach Anspruch 2, wobei die Halteabschnitte in Umfangsrichtung der Scheibe vorstehen und konkave Abschnitte, in die die Halteabschnitte eingesetzt sind, auf den anderen Seitenflächenabschnitten der Plattenelemente und des Flanschabschnitts des Nabenelements ausgebildet sind.

4. Drehmoment absorbierende Scheibe nach Anspruch 3, wobei in axialer Richtung vorstehende Kantenabschnitte auf den äußeren Umfangsendabschnitten der Fensterabschnitte so ausgebildet sind, dass ein paar von Räumen jeweils zwischen dem Flanschabschnitt des Nabenelements und den Plattenelementen ausgebildet sind, wobei die Führungsabschnitte so in die Räume eingesetzt sind, dass der Flanschabschnitt des Nabenelements zwischen ihnen festgeklemmt wird.

5. Drehmoment absorbierende Scheibe nach Anspruch 4, wobei die Halteabschnitte der Sitzelemente eine halbkreisförmige Schnittkontur haben und die konkaven Abschnitte der Plattenelemente und des Flanschabschnitts des Nabenelements jeweils die selbe Kontur wie die Halteabschnitte haben.

6. Drehmoment absorbierende Scheibe nach Anspruch 5, wobei jede der äußeren Umfangsendflächen der Fensterabschnitte und der Kerbenabschnitte eine Neigung mit einem vorbestimmten Winkel bezogen auf die gegenüberliegenden ebenen Flächen der anderen Seitenflächen der Sitzelemente hat.

## Revendications

1. Disque d'absorption de couple comprenant :
un élément de moyen comportant une partie de flasque,
des éléments de plaque disposés autour d'une partie de moyeu de l'élément de moyeu de façon à être opposés à la partie de flasque dans la direction axiale, respectivement,
une pluralité d'éléments de torsion se raccordant élastiquement entre l'élément de moyeu et les éléments de plaque dans la direction circonférentielle du disque et
une pluralité d'éléments de siège dont chacun est disposé entre chacun des éléments de torsion, des éléments de plaque et de l'élément de moyeu, chacun des éléments de siège comportant une première partie de face latérale qui est en contact avec la surface d'extrémité circonférentielle de chacun des éléments de torsion et l'autre partie de face latérale qui est en contact avec les éléments de plaque et la partie de flasque de l'élément de moyeu, l'autre partie de face étant munie d'une partie de maintien dépassante maintenue sur la partie de flasque d'élément de moyeu et positionnée au niveau de son côté interne dans la direction radiale du disque de façon à ne pas pouvoir déplacer les éléments de siège par rapport à l'élément de moyeu dans la direction radiale du disque et une partie de guidage serrant la partie de flasque de l'élément de moyeu dans la direction axiale du disque, dans lequel un espace est ménagé entre l'autre partie de face au niveau de son côté externe dans la direction radiale du disque et la partie de flasque de l'élément de moyeu de façon à pouvoir faire tourner les éléments de siège autour de la partie de maintien pendant la zone de début où le couple est transmis des éléments de plaque à l'élément de moyeu.

2. Disque d'absorption de couple selon la revendication 1, dans lequel les éléments de plaque comprennent deux plaques, chacune des plaques munie d'une pluralité de parties de fenêtre qui se prolonge dans la direction circonférentielle à des intervalles réguliers et sont placés sur un cercle concentrique, la partie de flasque de l'élément de moyeu est munie d'une pluralité de parties d'encoche qui se prolongent dans la direction circonférentielle aux même intervalles réguliers et sont placés sur le même cercle concentrique et les éléments de torsion sont disposés dans les parties de fenêtre et d'encoche qui se chevauchent les unes les autres.

3. Disque d'absorption de couple selon la revendication 2, dans lequel les parties de maintien dépassent dans la direction circonférentielle du disque et des parties concaves dans lesquelles les parties de maintien sont insérées, sont formées sur les autres parties de face latérales des éléments de plaque et de la partie de flasque de l'élément de moyeu.

4. Disque d'absorption de couple selon la revendication 3, dans lequel des parties de bord dépassant dans la direction axiale sont formées sur les parties d'extrémité circonférentielle externe des parties de fenêtre de façon à former une paire d'espaces entre la partie de flasque de l'élément de moyeu et les éléments de plaque, respectivement, et les parties de guidage sont insérées dans les espaces de façon à serrer la partie de flasque de l'élément de moyeu entre ceux-ci.

5. Disque d'absorption de couple selon la revendication 4, dans lequel les parties de maintien des éléments de siège ont une forme en section transversale en demi-cercle et les parties concaves des éléments de plaque et de la partie de flasque de l'élément de moyeu ont la même forme que les parties de maintien, respectivement.

6. Disque d'absorption de couple selon la revendication 5, dans lequel chacune des surfaces d'extrémité circonférentielle externe des parties de fenêtre et des parties d'encoche présente une inclinaison d'un angle prédéterminé par rapport aux surfaces plates opposées des autres faces latérales des éléments de siège.
